# EUROPEAN PATENT SPECIFICATION

(11) **EP 3 799 358 B1**
(45) Date of publication and mention of the grant of the patent: **09.12.2026**
(21) Application number: 19200090.9
(22) Date of filing: 27.09.2019
(51) Int. Cl.: H04L 12/28, H04B 7/06

(54) **BULK CONFIGURATION OF BUILDING TECHNOLOGY DEVICES**
MASSENKONFIGURATION VON GEBÄUDETECHNOLOGIEVORRICHTUNGEN
CONFIGURATION EN VRAC DE DISPOSITIFS DE TECHNOLOGIE DE BÂTIMENT

(43) Date of publication of application: 31.03.2021
(73) Proprietor: Tridonic GmbH & Co. KG, 6851 Dornbirn (AT)
(72) Inventor: Kohlgrüber, Stefan, 6851 Dornbirn (AT)
(74) Representative: Beder, Jens

(56) References cited:
- US-A1- 2002 055 345
- US-A1- 2003 120 742
- US-A1- 2011 102 148
- US-A1- 2017 132 168
- US-A1- 2019 007 121

## Description

The invention relates to an apparatus and method for configuring building technology devices. The invention further relates to a building technology device that can be configured by the apparatus in large quantity.

The term "configuring" is generally used to refer to both, the programming of devices for dedicated behavior and to assign operating parameters and/or addresses to the devices.

DE 10 2016 210 414 A1 discloses a system for wirelessly configuring components of a lighting system, in which the components comprise RFID or NFC transponder to receive configuration data transmitted from a read/write device, so that the components can be configured in a de-energised state and, thus, before they are installed.

However, this system does not allow to configure a plurality of devices in a single operation, for example, at the factory before delivery. One problem is that the transmitted signal is not strong enough to ensure proper reception at all devices. Another problem is the verification whether all devices are successfully configured.

An apparatus for configuring a plurality of building technology devices, in which all features of the preamble of claim 1 are disclosed, is described in US 2011/102148 A1.

US 2002/055345 A1 discloses a wireless communication system, in which both a transmitter for transmitting a signal to a transponder and a receiver for receiving a response from the transponder comprise a plurality of antennas, wherein the antenna for transmitting the signal and/or the antenna for receiving the response is changed when successful communication can not be established.

US 2019/007121 A1 discloses a wireless communication system comprising a base station and a terminal, in which the base station transmits a training sequence, transmission quality is determined based on the training sequence and antenna array of the terminal is optimized based on the determined transmission quality.

US 2003/120742 A1 discloses a home network system in which a home server includes a directional antenna and selectively distributes received content to a plurality of home display units located at different locations by driving a rotation mechanism of the directional antenna.

US 2017/132168 A1 discloses a method, in which a mobile device transmits configuration information to a powered-off server via Near Field Communication (NFC).

It is an object of the present invention to overcome the above-mentioned drawbacks and to provide an improved apparatus for configuring a plurality of building technology devices. More specifically, it is an object of the invention to provide an apparatus and a method, with which a plurality of devices can be configured in a time efficient manner and to provide a system including the apparatus and the building technology devices that can be easily configured in large volumes.

This object is achieved by an apparatus, a method and a system according to the enclosed independent claims. Advantageous features of the present invention are defined in the corresponding dependent claims.

According to the present invention, an apparatus for configuring building technology devices comprises a control means for acquiring configuration data and for controlling a transmission of the configuration data to the building technology devices using at least one antenna for transmitting the configuration data to the building technology devices. Further, the apparatus comprises a changing means for changing a position and/or direction of the at least one antenna from which the configuration data are received by the building technology devices. The transmission of the configuration data is executed in a plurality of transmission cycles, at least one before and one after the position and/or direction change.

The strength of the signal transmitted by an antenna is limited and the strengths of the signals received by the building technology devices are different and are dependent on the device position and/or orientation with respect to the antenna, and on the coverage area of the antenna. With the present invention, the position and/or direction (including the distance between the antenna and the building technology devices) is changed during the configuration operation relative to the devices, and for each position and/or direction one transmission cycle is executed so that all devices are covered by a region of sufficient signal strength and receive the configuration data. The position and/or direction is automatically changed during the configuration operation (between the transmission cycles) or only if it is determined that the configuration data are not successfully received by all devices in a transmission cycle, which means that not all devices are configured.

The control means is configured to receive after each transmission cycle, via the at least one antenna, a response from each building technology devices that has received the configuration data, and is configured to determine whether or not all building technology devices are configured successfully based on a unique device identifier included in the response by detecting the unique device identifier in each received response and counting the number of different unique device identifiers received and/or matching the received unique device identifiers and unique device identifiers of a list or based on the number of configurations of the at least one of the building technology devices indicated by the response by detecting the number of configurations in each received response and determining the number of the building technology devices that are configured in each transmission cycle based on the numbers of configurations and is configured to control the changing means to change said relative position and/or direction of the at least one antenna, when not all building technology devices of the plurality of building technology devices are configured successfully. Thus, the building technology devices or at least the number of the building technology devices that are not configured can be determined. Information on the determination result can be output or displayed.

The apparatus may comprise a plurality of antennas arranged at different positions and/or with different orientations relative to the devices, wherein the changing means is configured to switch between different antennas for changing the relative position and/or direction.

Alternatively or in addition, the changing means can comprise a drive system that is controlled by the control means and that is configured to move the at least one antenna and/or the building technology devices relative to each other for changing the relative position and/or direction. In that case, even one antenna would be sufficient to cover the entire plurality of devices with sufficient signal strength.

Alternatively or in addition, the apparatus comprises two or more opposing antennas to enable a homogenous field distribution between the opposing antennas, wherein all or a part of the building technology devices can be positioned between the opposing antennas.

According to the present invention, a system comprising an apparatus according to any one claims 1 to 4 and the plurality of build-ing technology devices building technology device comprises a transponder for receiving the configuration data transmitted by the above-described apparatus, storing the configuration data and transmitting a response to the apparatus. Further, the device comprises control means for controlling the building technology device based on the received configuration data.

The transponder may be configured to receive and store the configuration data when the building technology device is not supplied with power (de-energised state) and the control means is configured to read out the configuration data when the building technology device is supplied with power.

Alternatively or in addition, the transponder can be configured to determine whether or not the configuration data are received in its entirety by performing, for example, cyclic redundancy check (CRC) and to transmit the response to said apparatus, if the configuration data are received in its entirety.

Alternatively or in addition, the transponder can be configured to count the number of transmissions, in which the configuration data are received in its entirety, and to transmit the response indicating the number of transmissions to said apparatus. Counting the number of transmissions may be conducted by incrementing a counter each time received configuration data is stored successfully in an internal memory of the transponder.

Alternatively or in addition, after the transmission, the transponder send back an "acknowledge" including an ID (the unique device identifier).

The transponder can be configured to store the configuration data each time the configuration data are received or until a predetermined number of transmissions is reached. Alternatively, the configuration data can contain version information and the transponder can be configured to compare the version information of the received configuration data and the version information of the configuration data already stored in the building technology device and to determine, based on the comparison, whether or not the stored configuration data are to be overwritten/replaced by the received configuration data.

The transponder can be a RFID transponder or a NFC transponder, wherein the at least one antenna is configured to transmit and receive the configuration data to/from the RFID transponder or a NFC transponder.

According to the present invention, a method for configuring building technology devices comprises the steps of:
- acquiring configuration data,
- transmitting, by at least one antenna, the configuration data to the building technology device in a first transmission cycle,
- receiving, via the at least one antenna, a response from at least one building technology device to which the configuration data was transmitted,
- determining whether or not all building technology devices are successfully configured in the first transmission cycle based on a unique device identifier included in the response by detecting the unique device identifier in each received response and counting the number of different unique device identifiers received and/or matching the received unique device identifiers and unique device identifiers of a list or based on the number of configurations of the at least one building technology device indicated by the response by detecting the number of configurations in each received response and determining the number of the building technology devices that are configured in the first transmission cycle based on the numbers of configurations, and when not all building technology devices of the plurality of building technology devices are configured successfully,
- changing a relative position and/or direction of the at least one antenna from which the configuration data are received by the building technology devices and transmitting, in a further transmission cycle, the configuration data to the plurality of building technology devices.

The invention will now be explained in more detail with reference to the accompanying drawings, wherein:
FIG. 1 shows, in schematic form, an apparatus according to a first embodiment of the present invention,
FIG. 2 shows a building technology device according to an embodiment of the present invention,
FIG. 3A shows, in schematic form, an apparatus according to a second embodiment of the present invention in a first phase,
FIG. 3B shows, in schematic form, an apparatus according to the second embodiment of the present invention in a second phase, and
FIG. 4 shows a flowchart of the method according to an embodiment of the present invention.

The same features are denoted by the same reference signs throughout all figures.

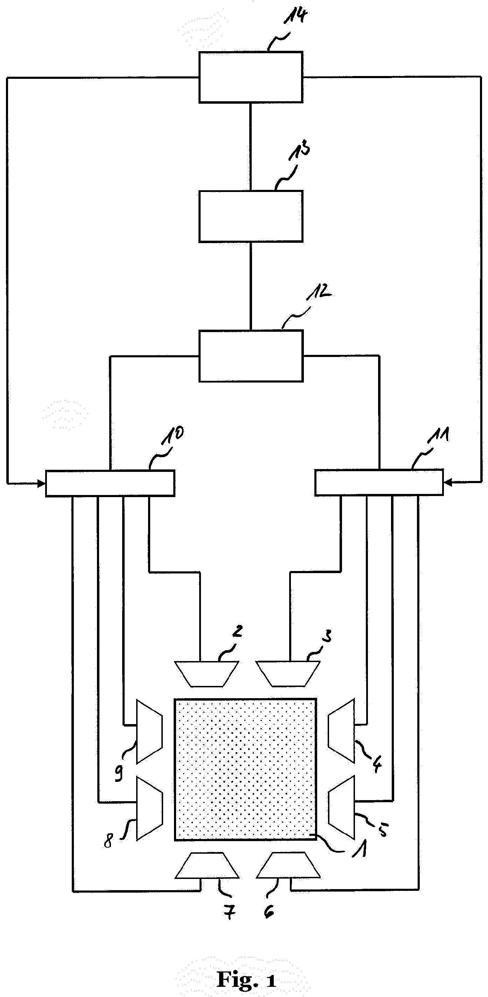

FIG. 1 shows an apparatus according to a first embodiment of the present invention and a carton box 1 that contains a plurality of building technology devices (not individually shown) that are to be configured. It is to be noted that the carton box 1 is only one example for any kind of arrangement of a plurality of preferably identical devices, that are arranged so that they may not be accessed individually but only as a group consisting of a plurality of devices. The apparatus comprises eight antennas 2..9, two multiplexers 10, 11, a power splitter 12, a NFC reader/writer 13 and a control means 14. The antennas 2..9 are arranged around the carton box 1 (top-down view) and are directed towards the carton box 1, wherein each antenna 2..9 is directed to a different area of the carton box 1. Instead of the carton box 1, the building technology devices can be stacked on a pallet.

The control means 14, which can be a tablet, laptop, smart phone or personal computer, includes a graphical user interface and a software application configured to assist a user to select/acquire the configuration data to be transmitted to the building technology devices, which can be LED control gears, ballasts, luminaires and/or sensor devices. The selected configuration data are output to the NFC reader/writer 13 that modulates the configuration data on a signal to be supplied to at least one of the antennas 2..9. The power splitter 12 forwards the signal received from the NFC reader/writer 13 to the two multiplexers 10, 11. The power splitter 12 enables to divide received power for feeding two antennas so that that radiation of a single antenna does not exceed a predetermined threshold, based on governmental regulations.

The control means 14 controls the multiplexers 10, 11, so that the signal is supplied to the at least one antenna 2..9, from which the signal is transmitted to the building technology devices. In order to transmit the configuration data to almost all building technology devices included in the carton box 1, the antennas 2..9 transmitting the signal are switched/changed by the multiplexers 10, 11, so that the position and/or direction, from which the configuration data are received by the building technology devices, is changed during the configuration operation. The chronological order of the active antennas 2..9 can be: antenna 2 -> antenna 3 -> antenna 4 -> antenna 5 -> antenna 6 -> antenna 7 -> antenna 8 -> antenna 9. For an improved time efficiency, it is also possible to use more than one antenna at a time, for example: antennas 2 and 3 -> antennas 9 and 4 -> antennas 8 and 5 -> antennas 7 and 6. Further, for forming a so-called "Helmholtz antenna", which enables relatively homogenous field distribution, it is also possible to use two or more opposing antennas (set of opposing antennas) at the same time, for example: antennas 2 and 7 -> antennas 3 and 6 -> antennas 9 and 4 -> antennas 8 and 5. Other combinations of active antennas are possible/switchable and can be manually or automatically selected dependent on the form of the carton box 1, type of the building technology device and/or the positions of the building technology devices in the carton box 1.

It is to be noted that the same effect of changing the coverage area inside the entirety of devices to which the configuration data shall be transmitted, may be achieved by moving at least one antenna relative to the devices. For conciseness of the further explanation it will, however, be referred to the multiple antenna configuration as shown in FIG. 1. The "coverage area" is considered to represent a volume in which signal quality and signal strength are sufficient to successfully transmit data to devices whose antenna is arranged - a correct orientation of the antenna assumed - inside this volume, so that the devices are successfully configured.

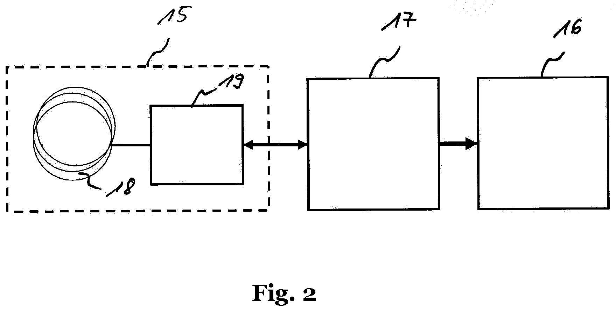

FIG. 2 shows one building technology device according to an embodiment of the present invention, which one of the plurality of devices is included in the carton box 1 shown in FIG. 1. The building technology device shown in FIG. 2 is an LED control gear and comprises a transponder 15 that receives and stores the configuration data, an LED driver 16 and a controller 17 that controls the LED driver 16 based on the configuration data. The controller 17 can be a microcontroller or an Application-Specific Integrated Circuit (ASIC). The transponder 15 includes an antenna 18, a control unit 19 and an EEPROM (not shown) that stores the configuration data received via the antenna 18. The controller 17 reads out the stored configuration data, when the building technology device/LED control gear is connected to the mains supply and the controller 17 is supplied with power, and controls the LED driver 16 based the configuration operation.

The control unit 19 determines whether the configuration data are received in its entirety by performing cyclic redundancy check (CRC) and transmits, if the check has been successfully completed, a response or an acknowledgment to the apparatus in order to indicate the successful configuration. The received configuration data are always stored in the EEPROM or only when they are new.

The configuration data can contain version information and the transponder can compare the version information of the received configuration data and the version information of the configuration data already stored in the EEPROM to determine whether or not the received configuration data are new, i.e. whether or not the stored configuration data are to be overwritten by the received configuration data.

The response from the device includes information, based on which the apparatus determines whether all building technology devices in the carton box 1 are configured and includes at least a unique device identifier. The response may include besides the unique identifier of the building technology device (or its transponder 15) the number of configurations cycles that is counted by the control unit 19. Each building technology device that is successfully configured by the apparatus sends the response, which is received by the NFC reader/writer 13 via one of the active antennas 2..9.

After the configuration data are transmitted by the at least one of the antennas 2..9 or a plurality of antennas 2..9, the control means 14 compares the received unique identifiers included in the responses and a list of unique identifiers of the entirety of devices to be configured and included in the carton box 1, and determines whether all building technology devices in the carton box 1 are configured. The unique identifiers and/or the number of the building technology devices that are not yet successfully configured are displayed and/or the user is requested to change the position of the carton box 1 and to continue with a new cycle in the configuration operation if not all building technology devices in the carton box 1 are configured.

The list stored in the control means may include a correspondence between a unique device identifier and a counter value that is incremented in the device each time the device is successfully configured. The list is updated for every response received. When a new response is received after a further transmission cycle, the received counter value associated with a unique device identifier of a device allows to determine those devices which have not yet been successfully configured.

Alternatively or in addition, when it is determined that not all building technology devices are successfully configured and/or the configuration data are not transmitted by all antennas 2..9, the control means 14 controls the multiplexers 10, 11 to change the antenna(s) 2..9 and/or the combination of the antennas 2..9, from which the configuration data are transmitted.

In case of using only one antenna or only one set of opposing antennas, at this point in time, the position and/or direction of this antenna relative to the carton box 1 is changed.

It is also possible to perform the completeness check based on the number of configurations (counter value) indicated in each response, when merely the number of the building technology devices in the carton box 1 is known and the initial counter values of all building technology devices are equal. For example, when the number of the building technology devices is twenty und the initial counter value is two, in a first phase (first transmission cycle) of the configuration operation (first combination of active antennas 2..9), fifteen responses have a counter value of three, and, in a second phase (second transmission cycle) of the configuration operation (second combination of active antennas 2..9), four responses have a counter value of three and ten responses have a counter value of four, the control means 14 determines that nineteen (15+4) building technology devices are configured at least once, ten building technology devices are configured twice and, consequently, one building technology device has not been configured, yet. The control means 14 can initiate a third phase (third transmission cycle) of the configuration operation (third combination of active antennas 2..9) or can simply try again the first and/or second combination (temporary disturbance) in order to receive the response having the counter value of three and/or can display a message as described above. The configuration operation can be terminated automatically when all building technology devices are configured.

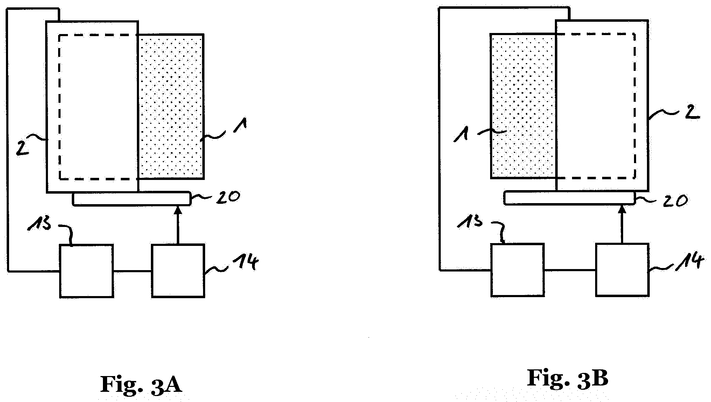

FIG. 3A shows another arrangement, in which the carton box 1 is arranged with a first relative position and orientation for transmission of configuration data in a first cycle. The apparatus shown in FIG. 3A comprises two opposing antennas 2 with the carton box 1 in between, the NFC reader/writer 13, the control means 14 and a drive system 20 that is controlled by the control means 14 and that moves the antennas 2 parallel to the upper surface of the carton box 1. In the first phase, the antennas 2 are positioned on the left side and the selected configuration data are outputted by the control means 14 to the NFC reader/writer 13 that modulates the configuration data on a signal that is supplied to the antenna 2. The configuration data are transmitted and may successfully program the devices whose antennas are located in the coverage area of the antennas 2 being in the position shown in fig. 3A. In the second cycle shown in FIG. 3B, the antenna 2 is positioned on the right side for changing the position and/or direction, from which the configuration data are received by the building technology devices. Together with the movement of the antennas 2, the coverage area of the antennas 2 has changed and consequently at least some other devices than during the first cycle are now in the coverage may be programmed. The responses of the building technology devices received after each transmission cycle are analyzed as described above.

Alternatively or in addition, the antenna 2 can be arranged lateral to the carton box 1 and/or the carton box 1 can be moved parallel to the antenna 2 or rotated.

The control means 14 shown in FIG. 1 and/or 3A and 3B can be configured to determine, by machine learning based on the received responses, most efficient antenna combinations and/or positions for a fast configuration operation.

In order to change the position and/or direction, the distance between the antenna 2 and the carton box 1 can be changed, the position of the carton box 1 and/or the position of the antenna 2 can be changed, and/or the orientation/pose of the carton box 1, the orientation/pose of the antenna 2 can be changed by, for example, rotating/tilling the carton box 1 and/or the antenna 2, and/or the number of active antennas 2 that transmit the configuration data in a transmission cycle can be changed. In particular, during the configuration operation, the number of active antennas 2 adjacent to one another can be increased in a cascade-like manner.

The control means 14 of the apparatuses described above includes a graphical user interface. However, the control means 14 can be a microcontroller and the configuration operation can be started manually by the user or can be started automatically when a sensor detects the carton box 1 inserted in the apparatus, wherein the configuration data to be transmitted are stored in the apparatus or are acquired from a server.

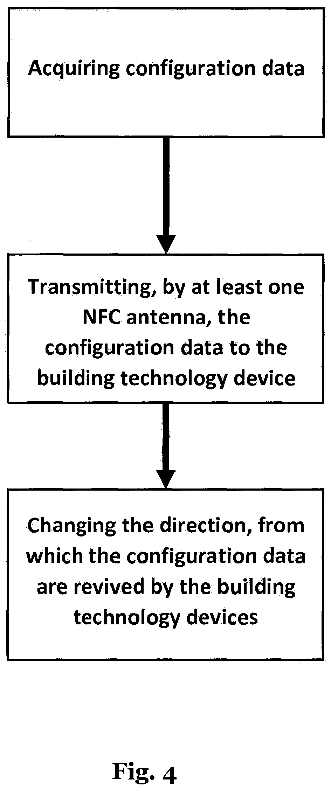

FIG. 4 shows a very simplistic flowchart showing the single steps performed by the method described in detail above.

## Claims

1. Apparatus for configuring a plurality of building technology devices, comprising
control means (14) for acquiring configuration data and for controlling a transmission of the configuration data to the plurality of building technology devices via at least one antenna (2..9) in a plurality of transmission cycles, wherein the control means (14) is configured to receive after each transmission cycle, via the at least one antenna (2..9), a response from at least one of the plurality of building technology devices to which the configuration data was transmitted, **characterized by**
changing means (10, 11, 20) for changing a relative position and/or direction of the at least one antenna (2..9) from which the configuration data are received by the plurality of building technology devices, wherein
the control means (14) is configured to determine whether or not all building technology devices of the plurality of building technology devices are configured successfully based on a unique device identifier included in the response by detecting the unique device identifier in each received response and counting the number of different unique device identifiers received and/or matching the received unique device identifiers and unique device identifiers of a list or based on the number of configurations of the at least one of the building technology devices indicated by the response by detecting the number of configurations in each received response and determining the number of the building technology devices that are configured in each transmission cycle based on the numbers of configurations and is configured to control the changing means (10, 11, 20) to change said relative position and/or direction of the at least one antenna (2..9), when not all building technology devices of the plurality of building technology devices are configured successfully.

2. The apparatus according to claim 1, wherein
the apparatus comprises a plurality of antennas (2..9) arranged at different positions and the changing means (10, 11, 20) is configured to switch between the antennas (2..9) for changing the relative position and/or direction for successive transmission cycles.

3. The apparatus according to claim 1 or 2, wherein
the changing means (10, 11, 20) comprises a drive system (20) that is controlled by the control means and that is configured to move the at least one antenna (2..9) and/or the building technology devices relative to each other for changing the relative position and/or direction.

4. The apparatus according to any one of claims 1 to 3, wherein
the control means (14) is configured to detect the unique device identifier in each received response and to generate a list of unique device identifiers based on the detection of the unique device identifiers.

5. A system comprising an apparatus according to any one claims 1 to 4 and the plurality of building technology devices, wherein each building technology device comprises
a transponder (15) for receiving configuration data transmitted by an apparatus according to any one of claims 1 to 4 and transmitting at least its unique device identifier in a response to said apparatus; and
a controller (17) for controlling the building technology device based on the received configuration data.

6. The system according to claim 5, wherein
the transponder (15) is configured to receive and store the configuration data when the building technology device is not supplied with power; and
the controller (17) is configured to read out the configuration data when the building technology device is supplied with power.

7. The system according to claim 5 or 6, wherein
the transponder (15) is configured to determine whether or not the configuration data are received in its entirety and to transmit the response to said apparatus, if the configuration data are received in its entirety.

8. The system according to claim 7, wherein
the transponder (15) is configured to count the number of transmissions, in which the configuration data are received in its entirety, and to transmit the response indicating the number of transmissions to said apparatus.

9. The system according to any one of claims 5 to 8, wherein
the configuration data contains version information and the transponder (15) is configured to compare the version information of the received configuration data and the version information of the configuration data already stored in the building technology device and to determine, based on the comparison, whether or not the stored configuration data are to be overwritten by the received configuration data.

10. The system according to any one of claims 5 to 9, wherein
the transponder (15) is a RFID transponder or a NFC transponder.

11. A method for configuring a plurality of building technology devices, comprising the steps of:
acquiring configuration data;
transmitting, by at least one antenna (2..9), in a first transmission cycle, the configuration data to the plurality of building technology devices; and
receiving, via the at least one antenna (2..9), a response from at least one of the plurality of building technology devices to which the configuration data was transmitted,
**characterized by**
determining whether or not all building technology devices of the plurality of building technology devices are successfully configured in a first transmission cycle based on a unique device identifier included in the response by detecting the unique device identifier in each received response and counting the number of different unique device identifiers received and/or matching the received unique device identifiers and unique device identifiers of a list or based on the number of configurations of the at least one of the plurality of building technology devices indicated by the response by detecting the number of configurations in each received response and determining the number of the plurality of building technology devices that are configured in the first transmission cycle based on the numbers of configurations, and
when not all building technology devices of the plurality of building technology devices are configured successfully, changing a relative position and/or direction of the at least one antenna (2..9) from which the configuration data are received by the plurality of building technology devices and transmitting, in a further transmission cycle, the configuration data to the plurality of building technology devices.

## Patentansprüche

1. Vorrichtung zum Konfigurieren einer Mehrzahl von gebäudetechnischen Geräten, umfassend
Steuermittel (14) zum Erfassen von Konfigurationsdaten und zum Steuern einer Übertragung der Konfigurationsdaten an die Mehrzahl von gebäudetechnischen Geräten über mindestens eine Antenne (2 .. 9) in einer Mehrzahl von Übertragungszyklen, wobei die Steuermittel (14) dazu konfiguriert sind, nach jedem Übertragungszyklus über die mindestens eine Antenne (2 .. 9) eine Antwort von mindestens einem der Mehrzahl von gebäudetechnischen Geräten zu empfangen, an das die Konfigurationsdaten übertragen wurden,
**dadurch gekennzeichnet, dass**
die Vorrichtung Änderungsmittel (10, 11, 20) zum Ändern einer relativen Position und/oder Richtung der mindestens einen Antenne (2 .. 9) umfasst, von der die Konfigurationsdaten durch die Mehrzahl von gebäudetechnischen Geräten empfangen werden, wobei die Steuermittel (14) dazu konfiguriert sind, zu bestimmen, ob alle gebäudetechnischen Geräte der Mehrzahl von gebäudetechnischen Geräten erfolgreich konfiguriert sind oder nicht, und zwar basierend auf einer in der Antwort enthaltenen eindeutigen Gerätekennung, indem die eindeutige Gerätekennung in jeder empfangenen Antwort detektiert und die Anzahl der verschiedenen empfangenen eindeutigen Gerätekennungen gezählt wird und/oder die empfangenen eindeutigen Gerätekennungen mit eindeutigen Gerätekennungen einer Liste abgeglichen werden, oder basierend auf der durch die Antwort angegebenen Anzahl von Konfigurationen des mindestens einen der gebäudetechnischen Geräte, indem die Anzahl von Konfigurationen in jeder empfangenen Antwort detektiert und die Anzahl der gebäudetechnischen Geräte, die in jedem Übertragungszyklus konfiguriert werden, basierend auf den Anzahlen von Konfigurationen bestimmt wird, und dazu konfiguriert sind, die Änderungsmittel (10, 11, 20) so zu steuern, dass die genannte relative Position und/oder Richtung der mindestens einen Antenne (2 .. 9) geändert wird, wenn nicht alle gebäudetechnischen Geräte der Mehrzahl von gebäudetechnischen Geräten erfolgreich konfiguriert sind.

2. Vorrichtung nach Anspruch 1, wobei
die Vorrichtung eine Mehrzahl von Antennen (2 .. 9) umfasst, die an unterschiedlichen Positionen angeordnet sind, und die Änderungsmittel (10, 11, 20) dazu konfiguriert sind, zwischen den Antennen (2 .. 9) umzuschalten, um die relative Position und/oder Richtung für aufeinanderfolgende Übertragungszyklen zu ändern.

3. Vorrichtung nach Anspruch 1 oder 2, wobei
die Änderungsmittel (10, 11, 20) ein Antriebssystem (20) umfassen, das durch die Steuermittel gesteuert wird und dazu konfiguriert ist, die mindestens eine Antenne (2 .. 9) und/oder die gebäudetechnischen Geräte relativ zueinander zu bewegen, um die relative Position und/oder Richtung zu ändern.

4. Vorrichtung nach einem der Ansprüche 1 bis 3, wobei
die Steuermittel (14) dazu konfiguriert sind, die eindeutige Gerätekennung in jeder empfangenen Antwort zu detektieren und basierend auf dem Detektieren der eindeutigen Gerätekennungen eine Liste eindeutiger Gerätekennungen zu erzeugen.

5. System, umfassend eine Vorrichtung nach einem der Ansprüche 1 bis 4 und die Mehrzahl von gebäudetechnischen Geräten, wobei jedes gebäudetechnische Gerät umfasst:
einen Transponder (15) zum Empfangen von Konfigurationsdaten, die durch eine Vorrichtung nach einem der Ansprüche 1 bis 4 übertragen werden, und zum Übertragen mindestens seiner eindeutigen Gerätekennung in einer Antwort an die genannte Vorrichtung; und
ein Steuergerät (17) zum Steuern des gebäudetechnischen Geräts basierend auf den empfangenen Konfigurationsdaten.

6. System nach Anspruch 5, wobei
der Transponder (15) dazu konfiguriert ist, die Konfigurationsdaten zu empfangen und zu speichern, wenn das gebäudetechnische Gerät nicht mit Energie versorgt wird; und
das Steuergerät (17) dazu konfiguriert ist, die Konfigurationsdaten auszulesen, wenn das gebäudetechnische Gerät mit Energie versorgt wird.

7. System nach Anspruch 5 oder 6, wobei
der Transponder (15) dazu konfiguriert ist, zu bestimmen, ob die Konfigurationsdaten vollständig empfangen werden oder nicht, und die Antwort an die genannte Vorrichtung zu übertragen, wenn die Konfigurationsdaten vollständig empfangen werden.

8. System nach Anspruch 7, wobei
der Transponder (15) dazu konfiguriert ist, die Anzahl von Übertragungen zu zählen, in denen die Konfigurationsdaten vollständig empfangen werden, und die Antwort, welche die Anzahl von Übertragungen angibt, an die genannte Vorrichtung zu übertragen.

9. System nach einem der Ansprüche 5 bis 8, wobei
die Konfigurationsdaten Versionsinformationen enthalten und der Transponder (15) dazu konfiguriert ist, die Versionsinformationen der empfangenen Konfigurationsdaten mit den Versionsinformationen der bereits in dem gebäudetechnischen Gerät gespeicherten Konfigurationsdaten zu vergleichen und basierend auf dem Vergleich zu bestimmen, ob die gespeicherten Konfigurationsdaten durch die empfangenen Konfigurationsdaten überschrieben werden sollen oder nicht.

10. System nach einem der Ansprüche 5 bis 9, wobei
der Transponder (15) ein RFID-Transponder oder ein NFC-Transponder ist.

11. Verfahren zum Konfigurieren einer Mehrzahl von gebäudetechnischen Geräten, umfassend die Schritte:
Erfassen von Konfigurationsdaten;
Übertragen der Konfigurationsdaten durch mindestens eine Antenne (2 .. 9) in einem ersten Übertragungszyklus an die Mehrzahl von gebäudetechnischen Geräten; und
Empfangen einer Antwort über die mindestens eine Antenne (2 .. 9) von mindestens einem der Mehrzahl von gebäudetechnischen Geräten, an das die Konfigurationsdaten übertragen wurden,
**dadurch gekennzeichnet, dass**
bestimmt wird, ob alle gebäudetechnischen Geräte der Mehrzahl von gebäudetechnischen Geräten in einem ersten Übertragungszyklus erfolgreich konfiguriert sind oder nicht, und zwar basierend auf einer in der Antwort enthaltenen eindeutigen Gerätekennung, indem die eindeutige Gerätekennung in jeder empfangenen Antwort detektiert und die Anzahl der verschiedenen empfangenen eindeutigen Gerätekennungen gezählt wird und/oder die empfangenen eindeutigen Gerätekennungen mit eindeutigen Gerätekennungen einer Liste abgeglichen werden, oder basierend auf der durch die Antwort angegebenen Anzahl von Konfigurationen des mindestens einen der Mehrzahl von gebäudetechnischen Geräten, indem die Anzahl von Konfigurationen in jeder empfangenen Antwort detektiert und die Anzahl der Mehrzahl von gebäudetechnischen Geräten, die in dem ersten Übertragungszyklus konfiguriert werden, basierend auf den Anzahlen von Konfigurationen bestimmt wird; und
wenn nicht alle gebäudetechnischen Geräte der Mehrzahl von gebäudetechnischen Geräten erfolgreich konfiguriert sind, eine relative Position und/oder Richtung der mindestens einen Antenne (2 .. 9), von der die Konfigurationsdaten durch die Mehrzahl von gebäudetechnischen Geräten empfangen werden, geändert wird und die Konfigurationsdaten in einem weiteren Übertragungszyklus an die Mehrzahl von gebäudetechnischen Geräten übertragen werden.

## Revendications

1. Appareil destiné à configurer une pluralité de dispositifs de technologie du bâtiment, comprenant
des moyens de commande (14) destinés à acquérir des données de configuration et à commander une transmission des données de configuration à la pluralité de dispositifs de technologie du bâtiment, par l'intermédiaire d'au moins une antenne (2 .. 9), au cours d'une pluralité de cycles de transmission, les moyens de commande (14) étant configurés pour recevoir, après chaque cycle de transmission, par l'intermédiaire de l'au moins une antenne (2 .. 9), une réponse provenant d'au moins un dispositif de la pluralité de dispositifs de technologie du bâtiment auquel les données de configuration ont été transmises,
**caractérisé en ce que**
l'appareil comprend des moyens de modification (10, 11, 20) destinés à modifier une position relative et/ou une direction relative de l'au moins une antenne (2 .. 9) depuis laquelle les données de configuration sont reçues par la pluralité de dispositifs de technologie du bâtiment, dans lequel
les moyens de commande (14) sont configurés pour déterminer si tous les dispositifs de technologie du bâtiment de la pluralité de dispositifs de technologie du bâtiment sont configurés avec succès ou non sur la base d'un identifiant unique de dispositif contenu dans la réponse, en détectant l'identifiant unique de dispositif dans chaque réponse reçue et en comptant le nombre d'identifiants uniques de dispositif différents reçus et/ou en faisant correspondre les identifiants uniques de dispositif reçus avec des identifiants uniques de dispositif d'une liste, ou sur la base du nombre de configurations de l'au moins un des dispositifs de technologie du bâtiment indiqué par la réponse, en détectant le nombre de configurations dans chaque réponse reçue et en déterminant, sur la base des nombres de configurations, le nombre de dispositifs de technologie du bâtiment qui sont configurés au cours de chaque cycle de transmission, et sont configurés pour commander les moyens de modification (10, 11, 20) afin de modifier ladite position relative et/ou ladite direction relative de l'au moins une antenne (2 .. 9), lorsque tous les dispositifs de technologie du bâtiment de la pluralité de dispositifs de technologie du bâtiment ne sont pas configurés avec succès.

2. Appareil selon la revendication 1, dans lequel
l'appareil comprend une pluralité d'antennes (2 .. 9) agencées à des positions différentes, et les moyens de modification (10, 11, 20) sont configurés pour commuter entre les antennes (2 .. 9) afin de modifier la position relative et/ou la direction relative pour des cycles de transmission successifs.

3. Appareil selon la revendication 1 ou 2, dans lequel
les moyens de modification (10, 11, 20) comprennent un système d'entraînement (20) qui est commandé par les moyens de commande et qui est configuré pour déplacer l'au moins une antenne (2 .. 9) et/ou les dispositifs de technologie du bâtiment les uns par rapport aux autres afin de modifier la position relative et/ou la direction relative.

4. Appareil selon l'une quelconque des revendications 1 à 3, dans lequel les moyens de commande (14) sont configurés pour détecter l'identifiant unique de dispositif dans chaque réponse reçue et pour générer une liste d'identifiants uniques de dispositif sur la base de la détection des identifiants uniques de dispositif.

5. Système comprenant un appareil selon l'une quelconque des revendications 1 à 4 et la pluralité de dispositifs de technologie du bâtiment, chaque dispositif de technologie du bâtiment comprenant :
un transpondeur (15) destiné à recevoir des données de configuration transmises par un appareil selon l'une quelconque des revendications 1 à 4 et à transmettre au moins son identifiant unique de dispositif dans une réponse audit appareil ; et
un contrôleur (17) destiné à commander le dispositif de technologie du bâtiment sur la base des données de configuration reçues.

6. Système selon la revendication 5, dans lequel
le transpondeur (15) est configuré pour recevoir et mémoriser les données de configuration lorsque le dispositif de technologie du bâtiment n'est pas alimenté en énergie ; et
le contrôleur (17) est configuré pour lire les données de configuration lorsque le dispositif de technologie du bâtiment est alimenté en énergie.

7. Système selon la revendication 5 ou 6, dans lequel
le transpondeur (15) est configuré pour déterminer si les données de configuration sont reçues dans leur intégralité ou non et pour transmettre la réponse audit appareil si les données de configuration sont reçues dans leur intégralité.

8. Système selon la revendication 7, dans lequel
le transpondeur (15) est configuré pour compter le nombre de transmissions au cours desquelles les données de configuration sont reçues dans leur intégralité et pour transmettre audit appareil la réponse indiquant le nombre de transmissions.

9. Système selon l'une quelconque des revendications 5 à 8, dans lequel les données de configuration contiennent des informations de version et le transpondeur (15) est configuré pour comparer les informations de version des données de configuration reçues avec les informations de version des données de configuration déjà mémorisées dans le dispositif de technologie du bâtiment et pour déterminer, sur la base de la comparaison, si les données de configuration mémorisées doivent être écrasées par les données de configuration reçues ou non.

10. Système selon l'une quelconque des revendications 5 à 9, dans lequel le transpondeur (15) est un transpondeur RFID ou un transpondeur NFC.

11. Procédé de configuration d'une pluralité de dispositifs de technologie du bâtiment, comprenant les étapes consistant à :
acquérir des données de configuration ;
transmettre, au moyen d'au moins une antenne (2 .. 9), au cours d'un premier cycle de transmission, les données de configuration à la pluralité de dispositifs de technologie du bâtiment ; et
recevoir, par l'intermédiaire de l'au moins une antenne (2 .. 9), une réponse provenant d'au moins un dispositif de la pluralité de dispositifs de technologie du bâtiment auquel les données de configuration ont été transmises,
**caractérisé en ce que**
l'on détermine si tous les dispositifs de technologie du bâtiment de la pluralité de dispositifs de technologie du bâtiment sont configurés avec succès ou non au cours d'un premier cycle de transmission sur la base d'un identifiant unique de dispositif contenu dans la réponse, en détectant l'identifiant unique de dispositif dans chaque réponse reçue et en comptant le nombre d'identifiants uniques de dispositif différents reçus et/ou en faisant correspondre les identifiants uniques de dispositif reçus avec des identifiants uniques de dispositif d'une liste,
ou sur la base du nombre de configurations de l'au moins un dispositif de la pluralité de dispositifs de technologie du bâtiment indiqué par la réponse, en détectant le nombre de configurations dans chaque réponse reçue et en déterminant, sur la base des nombres de configurations, le nombre de dispositifs de la pluralité de dispositifs de technologie du bâtiment qui sont configurés au cours du premier cycle de transmission ; et
lorsque tous les dispositifs de technologie du bâtiment de la pluralité de dispositifs de technologie du bâtiment ne sont pas configurés avec succès, l'on modifie une position relative et/ou une direction relative de l'au moins une antenne (2 .. 9) depuis laquelle les données de configuration sont reçues par la pluralité de dispositifs de technologie du bâtiment et l'on transmet, au cours d'un cycle de transmission supplémentaire, les données de configuration à la pluralité de dispositifs de technologie du bâtiment.
